# EUROPÄISCHE PATENTSCHRIFT

(11) **EP 2 456 998 B1**
(45) Veröffentlichungstag und Bekanntmachung des Hinweises auf die Patenterteilung: **09.09.2015**
(21) Anmeldenummer: 10737822.6
(22) Anmeldetag: 12.07.2010
(51) Int. Cl.: F16F 9/04, F16F 15/027

(54) **DÄMPFUNGSEINRICHTUNG**
DAMPING DEVICE
DISPOSITIF AMORTISSEUR

(30) Priorität: 24.07.2009 DE 102009034677
(43) Veröffentlichungstag der Anmeldung: 30.05.2012
(73) Patentinhaber: TrelleborgVibracoustic GmbH, 64293 Darmstadt (DE)
(72) Erfinder: CHAUVET, Ludovic, F-44470 Mauves/Loire (FR); GATTEPAILLE, Arnaud, F-44190 Clisson (FR)
(74) Vertreter: Flügel Preissner Kastel Schober
(86) Internationale Anmeldenummer: PCT/EP2010/060000
(87) Internationale Veröffentlichungsnummer: WO 2011/009752

(56) Entgegenhaltungen:
- EP-A1- 0 511 907
- DE-A1- 4 401 770
- FR-A- 1 112 259
- US-A- 4 516 545
- US-A- 4 854 555
- US-A- 5 062 497

## Beschreibung

Die vorliegende Erfindung betrifft eine Dämpfungseinrichtung zur Dämpfung von An- und Abstellschlägen eines Kraftfahrzeugmotors, mit einer ersten und zweiten Kammer, die mit einem Dämpfungsmedium gefüllt sind und durch eine Zwischenplatte getrennt sind, wobei die Kammern jeweils durch einen Faltenbalg und durch eine Stirnplatte begrenzt sind, wobei in der Zwischenplatte ein die Kammern verbindender Dämpfungskanal eingebracht ist, wobei beide Kammern mit wenigstens einem Bypasskanal verbunden sind, und wobei der Bypasskanal mittels eines schaltbaren Ventils freigebbar oder verschließbar ist. Des Weiteren bezieht sich die Erfindung auf ein Dämpfungssystem mit einer derartigen Dämpfungseinrichtung.

Um den Kraftstoffverbrauch zu reduzieren, verfügen moderne Kraftfahrzeuge häufig über ein so genanntes Start- und Stopp-System, das den Kraftfahrzeugmotor abschaltet, wenn dieser nicht benötigt wird, wie beispielsweise bei einem Ampelstopp. Die Funktionsweise dieses Systems kann wie folgt anhand eines Ampelstopps beschrieben werden. Hält der Fahrer an einer Ampel an und schaltet in den Leerlauf, so schaltet sich der Kraftfahrzeugmotor beim Lösen der Kupplung aus. Zum Losfahren betätigt der Fahrer die Kupplung und der Motor wird wieder gestartet. Bei den zuvor genannten An- und Abstellvorgängen kommt es zu starken Schlägen des Motors, die in der Fahrgastzelle zu spüren sind und folglich den Fahrkomfort einschränken.

Aus der US 6,082,508 geht eine Dämpfungseinrichtung der eingangs genanten Art hervor, die für den Einsatz in einem Satellit vorgesehen ist. Die Dämpfungseinrichtung weist eine Zwischenplatte und zwei sich in Längsrichtung von der Zwischenplatte jeweils in die entgegengesetzte Richtung wegerstreckende Faltenbalge auf. An ihren Stirnseiten sind die Faltenbalge mittels einer Platte derart verschlossen, dass zwei Arbeitskammern gebildet werden. Beide Kammern sind über einen Kanal in der Zwischenplatte miteinander verbunden. Als Arbeitsmedium wird ein kompressibles Fluid, insbesondere Luft, verwendet. Zur Dämpfung fließt das kompressible Fluid über den Dämpfungskanal von einer Kammer zur anderen Kammer, wobei der Dämpfungseffekt infolge der im Kanal auftretenden Reibung erzeugt wird.

Aus FR 1.112.259 A geht eine Dämpfungseinrichtung hervor, die zwei Arbeitskammern aufweist, wobei die Arbeitskammern durch eine Zwischenplatte voneinander getrennt sind. Ferner sind die Arbeitskammern durch jeweils eine Zwischenplatte und einen Faltenbalg begrenzt. In der Zwischenplatte ist ein Dämpfungskanal und ein Bypasskanal eingebracht, wobei der Dämpfungskanal mittels eines Expansionsventils freigebbar und verschließbar ist.

In US 5,062,497 A geht eine Dämpfungseinrichtung hervor, die zwei durch eine Zwischenplatte getrennte Arbeitskammern aufweist, wobei die Arbeitskammern jeweils durch eine Zwischenplatte und einen Faltenbalg begrenzt sind. Die beiden Kammern sind durch einen Flüssigkeitskanal, der mittels eines Ventils freigebbar und verschließbar ist, verbunden.

Aus US 4,854,555 A geht eine Dämpfungseinrichtung hervor, die zwei Kammern aufweist, die durch eine Zwischenplatte voneinander getrennt sind und jeweils durch ein Außengehäuse, einen Kolben und eine Membran begrenzt sind. In die Zwischenplatte ist ein Dämpfungskanal eingebracht. Des Weiteren ist in die Zwischenplatte eine Öffnung vorgesehen durch die eine Kolbenstange geführt ist, wobei zwischen der Öffnung und der Kolbenstange ein O-Ring angeordnet ist. Durch Weglassen des O-Rings wird eine Art Bypasskanal erzeugt. Die Dämpfungscharakteristik des Dämpfungskanals kann mittels einer rotierbaren Platte eingestellt werden.

In der US 4,516,545 ist eine Dämpfungseinrichtung zur Dämpfung der Bewegungen eines Kraftfahrzeugmotors offenbart. Die Dämpfungseinrichtung weist zwei mit Öl gefüllte Kammern auf, die durch eine Zwischenplatte voneinander getrennt sind und jeweils durch eine elastische Umhausung begrenzt sind. In der Zwischenplatte sind zwei mit unterschiedlichen Querschnitten versehene Kanäle eingebracht, die die beiden Kammern miteinander verbinden. Der Kanal mit größeren Querschnitt ist mittels eines Drehventils öffenbar und schließbar.

Der Erfindung liegt die **Aufgabe** zugrunde, eine Dämpfungseinrichtung zu schaffen, die die An- und Abstellschläge eines Kraftfahrzeugmotors dämpft und im Fahrbetrieb frei von einer Dämpfungswirkung ist.

Zur **Lösung** dieser Aufgabe wird bei einer Dämpfungseinrichtung der eingangs genannten Art vorgeschlagen, dass der Bypasskanal die beiden Kammern mit der Umgebung verbindet, dass der Schaltzustand des Ventils vom Betriebszustand des Kraftfahrzeugmotors abhängt und dass der Bypasskanal während des An- und Abstellvorgangs des Kraftfahrzeugmotors geschlossen ist und im Fahrbetrieb geöffnet ist.

Vorteilhafte Ausgestaltungen sind Gegenstand der Unteransprüche.

Bei der erfindungsgemäßen Dämpfungseinrichtung kann die Dämpfung abhängig vom Betriebszustand des Motors mittels des schaltbaren Ventils verändert werden. In einer ersten Schaltstellung ist der Bypasskanal verschlossen, so dass die verdrängte Luft über den zwischen den Kammern angeordneten Dämpfungskanal strömt. Hierdurch werden insbesondere die beim An- und Abstellen auftretenden Schläge gedämpft. In einer zweiten Schaltstellung ist der Bypasskanal geöffnet, so dass die verdrängte Luft über den Bypasskanal und nicht über den Dämpfungskanal strömt. Insbesondere infolge des größeren Querschnitts des Bypasskanals wird die Luft bei geöffnetem Bypasskanal über diesen geleitet, so dass im Fahrbetrieb keine Dämpfung erfolgt. Somit liegt in dieser Schaltstellung keine Dämpfung vor. Aufgrund der niedrigen Steifigkeit der Faltenbalge tritt auch bei hohen Frequenzen kein Dröhnen auf. Somit erhöht die erfindungsgemäße Dämpfungseinrichtung den Fahrkomfort. Da der Bypasskanal die beiden Kammern mit der Umgebung verbindet, ermöglicht der Bypasskanal ein Ausströmen des Dämpfungsmediums aus den beiden Kammern in die Umgebung, wodurch der Dämpfungskanal überbrückt wird.

In einer vorteilhaften Ausgestaltung weist der Bypasskanal einen größeren Querschnitt als der Dämpfungskanal auf. Hierdurch wird die Luft bei geöffnetem Bypasskanal über diesen geleitet, so dass im Fahrbetrieb keine Dämpfung erfolgt.

Vorteilhaft ist der Bypasskanal in der Zwischenplatte eingebracht.

Bei einer weiteren Ausgestaltung verbindet der Bypasskanal die beiden Kammern miteinander.

Bei einer weiteren Ausgestaltung ist ein erster Bypasskanal in die erste Stirnplatte zum Verbinden der ersten Kammer mit der Umgebung eingebracht und ein zweiter Bypasskanal ist in die zweite Stirnplatte zum Verbinden der zweiten Kammer mit der Umgebung eingebracht.

Vorteilhaft ist das Ventil als mehrstufig oder stufenlos verstellbares Ventil ausgebildet. Somit kann der Querschnitt des Bypasskanals vorteilhaft an die jeweilige Nickfrequenz des Kraftfahrzeugmotors angepasst werden.

Das Ventil ist vorteilhaft mittels Vakuum oder elektromagnetisch schaltbar. Derartige Ventile sind einerseits kostengünstig und weisen andererseits eine hohe Zuverlässigkeit auf.

In einer weiteren vorteilhaften Ausgestaltung wird als Dämpfungsmedium Luft verwendet. Luftlager sind im Vergleich zu hydraulischen Lagern kostengünstiger, da eine Befüllung mit Dämpfungsflüssigkeit entfällt.

Vorteilhaft sind die Faltenbälge koaxial zum Dämpfungskanal angeordnet.

Vorteilhaft ist die erste Stirnplatte an der Stirnseite des ersten Faltenbalges angebracht und die zweite Stirnplatte ist an der Stirnseite des zweiten Faltenbalges angebracht.

Die Faltenbälge weisen vorteilhaft eine Länge von 5 mm bis 20 mm, vorzugsweise von 5 mm bis 10 mm, auf. Des Weiteren weisen die Faltenbälge vorteilhaft einen äußeren Durchmesser von 70 mm bis 100 mm, vorzugsweise von 80 mm bis 90 mm, auf. Aufgrund der Abmaße der Faltenbälge wird ein vorteilhaftes kleines Kammervolumen sowie eine große Pumpfläche zur Verfügung gestellt, so dass ein wirksamer Dämpfungseffekt erzielt werden kann.

Vorteilhaft sind die Faltenbälge aus einem thermoplastischen Elastomer (TPE) oder einem Thermoplast (TP) hergestellt. Somit haben die Faltenbälge eine hohe Lebensdauer bei gleichzeitig konstanten Werkstoffeigenschaften.

Weiterhin betrifft die vorliegende Erfindung ein Dämpfungssystem zur Dämpfung von An- und Abstellschlägen eines Kraftfahrzeugmotors, das eine erfindungsgemäße Dämpfungseinrichtung und eine Steuereinrichtung zum Steuern des schaltbaren Ventils der Dämpfungseinrichtung abhängig vom Betriebszustand des Kraftfahrzeugmotors aufweist. Das schaltbare Ventil der Dämpfungseinrichtung wird über die Steuereinrichtung abhängig vom Betriebszustand des Kraftfahrzeugmotors angesteuert.

Vorteilhaft ist das schaltbare Ventil während des An- und Abstellvorgangs des Kraftfahrzeugmotors geschlossen und im Fahrbetrieb geöffnet. Somit erfolgt vorteilhaft während des An- und Abstellens des Kraftfahrzeugmotors eine Dämpfung und im Fahrbetrieb erfolgt keine Dämpfung.

Nachfolgend wird die Erfindung anhand von Ausführungsbeispielen näher erläutert, die in den Zeichnungen schematisch dargestellt sind. Hierbei zeigen:
Fig. 1 einen Horizontalschnitt durch eine erste Ausführungsform der erfindungsgemäßen Dämpfungseinrichtung;
Fig. 2 einen Horizontalschnitt durch die erfindungsgemäße Dämpfungseinrichtung mit daran angebrachten Verbindungselementen;
Fig. 3 eine schematische Darstellung des erfindungsgemäßen Dämpfungssystems;
Fig. 4 eine nicht erfindungsgemäße Dämpfungseinrichtung;
Fig. 5 einen Horizontalschnitt einer zweiten Ausführungsform der erfindungsgemäßen Dämpfungseinrichtung;
Fig. 6 eine graphische Darstellung der Dämpfungs- und Steifigkeitscharakteristik der erfindungsgemäßen Dämpfungseinrichtung während des An- und Abstellvorgangs und
Fig. 7 eine graphische Darstellung der Dämpfungs- und Steifigkeitscharakteristik der erfindungsgemäßen Dämpfungseinrichtung während des Fahrbetriebs.

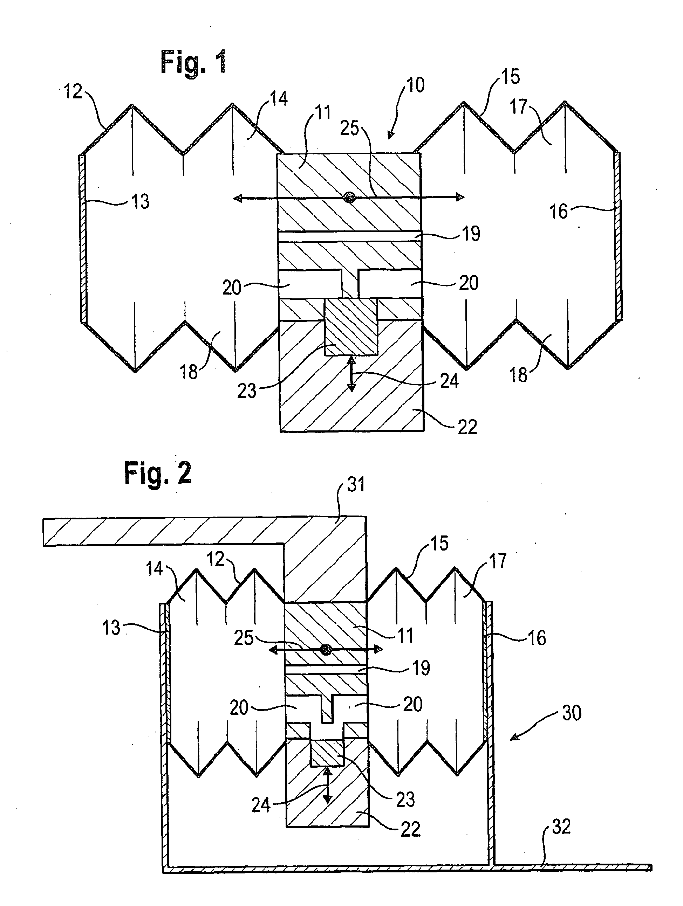

Fig. 1 zeigt eine Dämpfungseinrichtung 10, die zur Dämpfung von An- und Abstellschlägen eines quer eingebauten Kraftfahrzeugmotors 47 vorgesehen ist, der über ein Start-Stopp-System verfügt. Die Dämpfungseinrichtung 10 weist eine Zwischenplatte 11, einen ersten Faltenbalg 12, eine erste Stirnplatte 13, einen zweiten Faltenbalg 15 und eine zweite Stirnplatte 16 auf. Die Faltenbälge 12, 15 sind an einem ersten Endbereich mit der Zwischenplatte 11 verbunden. An einem zweiten Endbereich ist die Stirnplatte 13, 16 vorgesehen.

Die Zwischenplatte 11, der erste Faltenbalg 12 und die erste Stirnplatte 13 bilden eine erste Arbeitskammer 14. Die Zwischenplatte 11, der zweite Faltenbalg 15 und die zweite Stirnplatte 16 bilden eine zweite Arbeitskammer 17. Beide Arbeitskammern 14, 17 sind über einen in die Zwischenplatte 11 eingebrachten Dämpfungskanal 19 miteinander verbunden. Innerhalb der Arbeitskammern 14, 17 befindet sich ein Dämpfungsmedium 18, insbesondere Luft. Des Weiteren ist in die Zwischenplatte 11 ein Bypasskanal 20 eingebracht, der die erste Kammer 14 und die zweite Kammer 17 mit der Umbebung verbindet. Der Bypasskanal 20 weist einen größeren Durchmesser als der Dämpfungskanal 19 auf.

Die Zwischenplatte 11 besteht aus einem metallischen Werkstoff, kann aber auch aus einem Kunststoff hergestellt sein. Die Faltenbälge 12, 15 bestehen aus einem thermoplastischen Elastomer (TPE) oder einem Thermoplast (TP) und haben eine Länge von 5 mm bis 20 mm und einen äußeren Durchmesser von 70 mm bis 100 mm. Die Stirnplatten 13, 16 bestehen ebenfalls aus einem metallischen Werkstoff, können aber auch aus einem Kunststoff bestehen.

Zur Bildung der Kammern 14, 17 erstrecken sich die Faltenbälge 12, 15 weg von der Zwischenplatte koaxial zu dem Dämpfungskanal 19, wobei sich die Faltenbälge 12, 15 in entgegengesetzter Richtung erstrecken. Die offenen Stirnseiten der Faltenbälge 12, 15 sind jeweils mit einer Stirnplatte 13, 16 verschlossen. Zur Verbindung der Faltenbälge 12, 15 mit der Zwischenplatte 11 sowie mit den jeweiligen Stirnplatten 13, 16 werden allgemein bekannte Verbindungsverfahren, wie beispielsweise Kleben, eingesetzt.

Gemäß Fig. 1 ist an der Zwischenplatte 11 der Dämpfungseinrichtung 10 ein schaltbares Ventil 22 angebracht. Das schaltbare Ventil 22 weist ein Stellglied 23 auf, das in bekannter Weise mittels Vakuum oder elektromagnetisch schaltbar ist. Das Stellglied 23 öffnet oder schließt den Bypasskanal 20, wie dies mit Hilfe des in Fig. 1 gezeigten Doppelpfeils 24 dargestellt ist. Das Ventil kann auch mehrstufig oder stufenlos verstellbar ausgebildet sein. Hierdurch ist es möglich, den Kanalquerschnitt des Bypasskanals 20 stufig oder stufenlos zwischen Null und dem Maximalquerschnitt zu verstellen. Somit lässt sich die Dämpfungseinrichtung 10 optimal an die Nickfrequenz des Kraftfahrzeugmotors 47 anpassen.

In Fig. 1 ist die Dämpfungseinrichtung in einer ersten Schaltstellung gezeigt, in der der Bypasskanal 20 durch das Stellglied 23 geschlossen ist. Dies entspricht dem Schaltzustand während des An- und Abstellens des Kraftfahrzeugmotors 47.

In Fig. 2 ist die Dämpfungseinrichtung 10 in einer zweiten Schaltstellung, in der der Bypasskanal 20 geöffnet ist, gezeigt. In dieser Schaltstellung strömt die verdrängte Luft über den Bypasskanal 20 in die Umgebung, so dass keine Dämpfung erfolgt.

Des Weiteren ist in Fig. 2 eine Befestigungseinrichtung 30 zur Befestigung der Dämpfungseinrichtung 10 an dem Kraftfahrzeugmotor 47 und der Fahrzeugkarosserie dargestellt. Die Befestigungseinrichtung 30 weist ein motorseitiges Verbindungselement 31, das die Zwischenplatte 11 der Dämpfungseinrichtung 10 mit dem Kraftfahrzeugmotor 47 verbindet, und ein radhausseitiges Verbindungselement 31 zur Verbindung der Dämpfungseinrichtung 10 mit der Fahrzeugkarosserie auf. Das radhausseitige Verbindungselement 32 ist jeweils mit einer der Stirnplatten 13, 16 verbunden, so dass es die Dämpfungseinrichtung 10 umgreift.

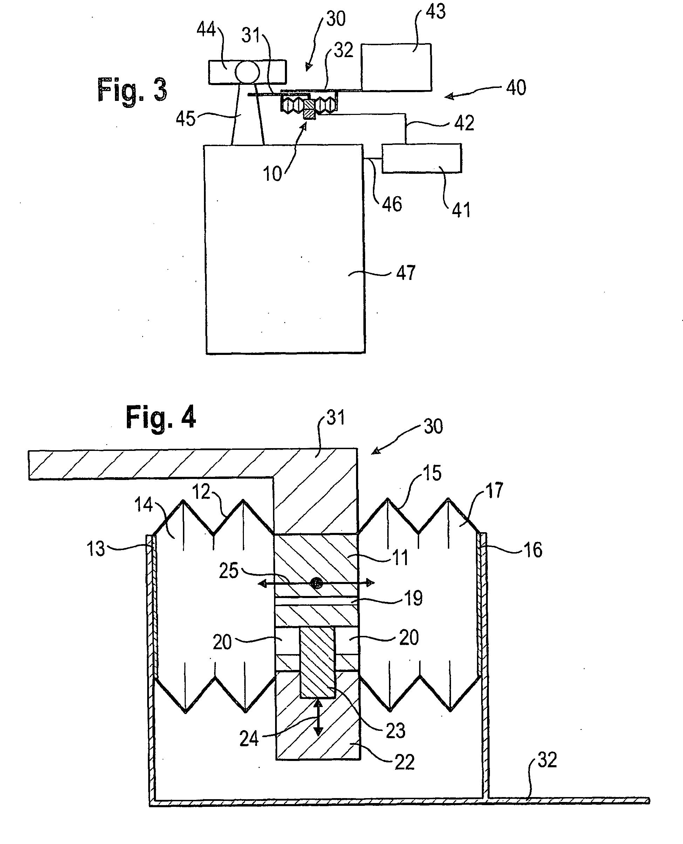

In Fig. 3 ist schematisch das Dämpfungssystem 40 dargestellt. Das Dämpfungssystem 40 weist die Dämpfungseinrichtung 10, eine Steuereinrichtung 41, eine erste Übertragungseinrichtung 42 zum Verbinden der Steuereinrichtung 41 mit dem schaltbaren Ventil 22 und eine zweite Übertragungseinrichtung 46 zum Verbinden des Kraftfahrzeugmotors 47 mit der Steuereinrichtung 41 auf. Zur Einbindung der Dämpfungseinrichtung 10 in das Dämpfungssystem 40 ist die Dämpfungseinrichtung 10 über das motorseitige Verbindungselement 31 mit einem Motorhalter 45, der mit einem nicht näher definierten Motorlager 44 verbunden ist, und über das radhausseitige Verbindungselement 32 mit einem Radhaus 43 verbunden.

Die Funktionsweise des Dämpfungssystems 40 wird nachfolgend beschrieben. Bei einem An- und Abstellvorgang des quer eingebauten Kraftfahrzeugmotors 47 führt dieser Nickbewegungen um die Fahrzeugquerachse aus. Mittels der zweiten Übertragungseinrichtung 46 wird die Information, dass es sich hierbei um einen An- und Abstellvorgang handelt, an die Steuereinrichtung 41 weitergeleitet. In der Steuereinrichtung 41 wird die Information derart verarbeitet, dass über die erste Übertragungseinrichtung 42 das schaltbare Ventil 22 derart angesteuert wird, dass das Stellglied 23 den Bypasskanal 20 verschließt. Folglich befindet sich die Dämpfungseinrichtung 10 in dem in Fig.1 dargestellten Zustand. Somit werden die Nickbewegungen des Kraftfahrzeugmotors 40 auf den Halter 45 übertragen und diese wiederum auf das motorseitige Verbindungselement 31, so dass sich die Zwischenplatte 11 in Fahrzeuglängsrichtung bewegt, wie dies in Fig. 2 mit dem Doppelpfeil 25 dargestellt ist. Durch die Bewegung der Zwischenplatte 11 strömt abwechselnd das Dämpfungsfluid 18 über den Dämpfungskanal 19 von einer Kammer in die andere Kammer 14, 17. Aufgrund des geringen Querschnitts des Dämpfungskanals 19 wird ein Reibungseffekt erzeugt, der zu einer Dämpfungswirkung führt.

Im Fahrbetrieb wird mit Hilfe der ersten Übertragungseinrichtung 42 das schaltbare Ventil 22 derart ansteuert, dass das Stellglied 23 den Bypasskanal 20 freigibt, wie dies in Fig. 2 dargestellt ist. Somit werden die während des Fahrbetriebs auftretenden Nickbewegungen des Kraftfahrzeugmotors 47 nicht gedämpft. Grund hierfür ist einerseits, dass das in den beiden Arbeitskammern 14,17 vorhandene Dämpfungsmedium 18 über den Bypasskanal 20 an die Umgebung abgeführt wird, und andererseits, dass die Faltenbälge 12, 15 eine niedrige statische Grundsteifigkeit aufweisen. Somit wird im Fahrbetrieb einem Dröhnen entgegengewirkt und zugleich wird der Fahrkomfort erhöht.

Fig. 4 zeigt eine nicht erfindungsgemäße Ausführungsform der Dämpfungseinrichtung 10, die sich von der Dämpfungseinrichtung 10 gemäß den Fig. 1 und 2 dadurch unterscheidet, dass der Bypasskanal 20 die Kammern 14, 17 miteinander verbindet, wobei der Bypasskanal 20 mittels des Stellglieds 23 freigebbar oder verschließbar ist. Zur Erzielung einer Dämpfungswirkung wird der Bypasskanal 20 mit Hilfe des Stellglieds 23 verschlossen. Um im Fahrbetrieb keine Dämpfungswirkung zu erzielen, wird das Stellglied 23 in eine Position verfahren, die den Bypasskanal 20 freigibt.

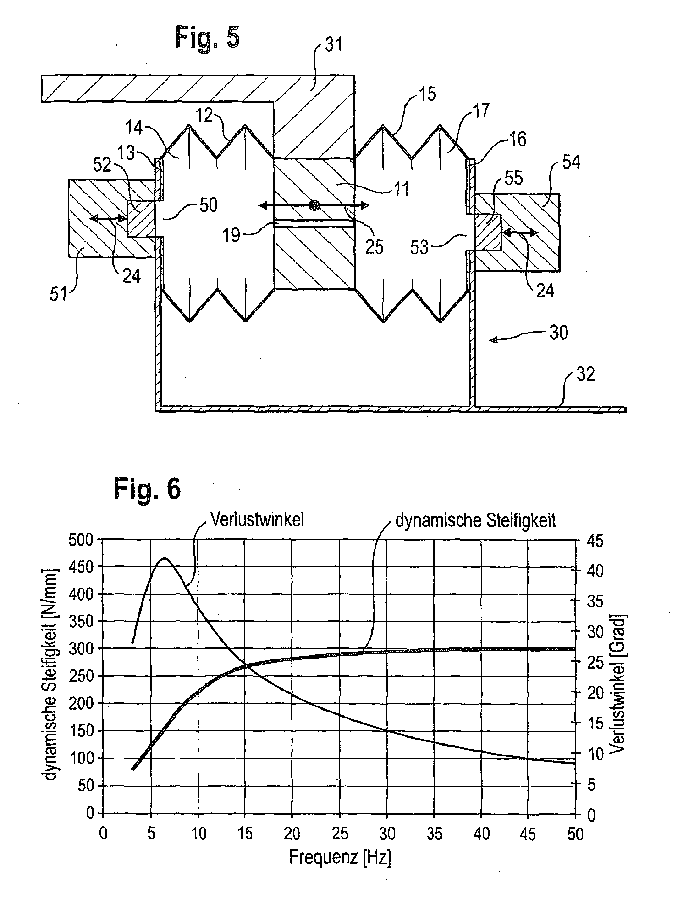

Fig. 5 zeigt eine zweite Ausführungsform der erfindungsgemäßen Dämpfungseinrichtung 10. Die Dämpfungseinrichtung 10 gemäß der zweiten Ausführungsform unterscheidet sich von der ersten Ausführungsform darin, dass jeweils ein Bypasskanal 50, 53 in die Stirnplatte 13, 16 eingebracht ist, wobei jeder Bypasskanal 50, 53 über jeweils ein schaltbares Ventil 51, 54 freigebbar und verschließbar ist. In der ersten Stirnplatte 13 ist ein erster Bypasskanal 50 eingebracht, wobei an der ersten Stirnplatte 13 das erste schaltbare Ventil 51 angebracht ist, dessen erstes Stellglied 52 den ersten Bypasskanal 50 verschließt oder öffnet. An der zweiten Stirnplatte 16 ist ein zweiter Bypasskanal 53 eingebracht, der mittels eines zweiten Stellglieds 55 des zweiten schaltbaren Ventils 54 freigebbar oder verschließbar ist. Sowohl das erste schaltbare Ventil 51 als auch das zweite schaltbare Ventil 54 sind über die Übertragungseinrichtung 42 mit der Steuereinrichtung 41 verbunden. Zur Erzielung einer Dämpfungswirkung wird sowohl der erste Bypasskanal 50 als auch der zweite Bypasskanal 53 mit Hilfe der Stellglieder 52, 55 verschlossen. Um keinen Dämpfungseffekt zu erzielen, werden beide Bypasskanäle 50, 53 freigegeben.

Die Funktionsweise der beiden Ausführungsformen sowie deren Befestigungseinrichtung 30 entspricht denen der ersten Ausführungsform, so dass auf eine detaillierte Beschreibung im Folgenden verzichtet wird.

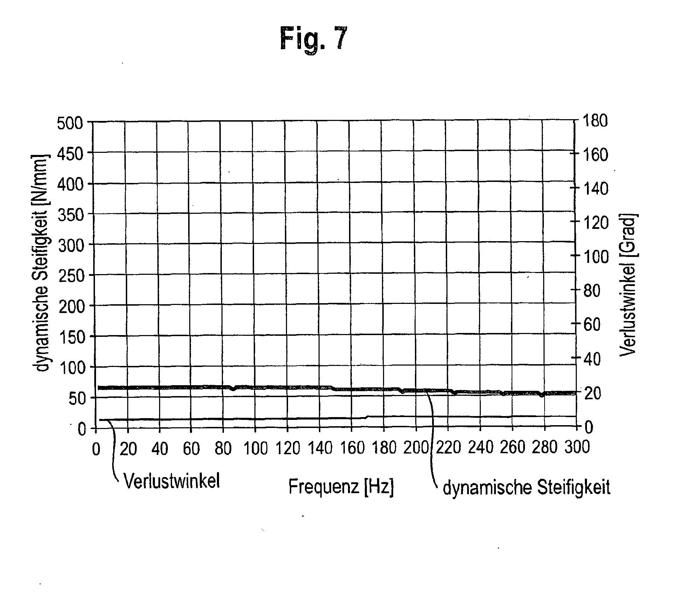

In den Fig. 6 und 7 ist die Dämpfungs- und Steifigkeitscharakteristik der Dämpfungseinrichtung 10 in verschiedenen Schaltstellungen des Ventils 22 gezeigt. Hierbei ist der Verlauf der dynamischen Steifigkeit und der Verlauf des Verlustwinkels dargestellt.

In Fig. 6 ist die Dämpfungs- und Steifigkeitscharakteristik der Dämpfungseinrichtung 10 während eines An- und Abstellvorgangs eines Kraftfahrzeugmotors 47 bei einer Amplitude von +/- 4 mm und einem Kanaldurchmesser von 1,5 mm dargestellt. Dieser Kanaldurchmesser entspricht dem Durchmesser des Dämpfungskanals 19. Hierbei ist ersichtlich, dass der Verlustwinkel sein Maximum bei einer Frequenz von ungefähr 6 Hz hat und mit zunehmender Frequenz sinkt. Somit liegt bei großen Amplituden und niedrigen Frequenzen eine hohe Dämpfung vor. Die dynamische Steifigkeit ist im Gegensatz zu dem Verlustwinkel bei niedrigen Frequenzen und großen Amplituden gering und nimmt mit steigender Frequenz zu. Dies entspricht einer Verhärtung des Lagers bei hohen Frequenzen.

Fig. 7 zeigt die Dämpfungscharakteristik der Dämpfungseinrichtung 10 während des Fahrbetriebs bei einer Amplitude von +/- 0,05 mm und einem Kanaldurchmesser (Dämpfungskanal 19 und Bypasskanal 20) von 15 mm. Hieraus ist ersichtlich, dass der Verlustwinkel aufgrund des geöffneten Bypasskanals 20 annähernd Null ist und die dynamische Steifigkeit einen Wert von 60 N/mm annimmt. Folglich stellt die Dämpfungseinrichtung 10 in diesem Schaltzustand nur einen sehr weichen Übertragungsweg dar und für den Fahrer ist im Fahrbetrieb keinerlei Dröhnen wahrnehmbar.

Bei der vorstehend beschriebenen Dämpfungseinrichtung 10 kann die Dämpfung abhängig vom Betriebszustand des Kraftfahrzeugmotors 47 mit Hilfe des schaltbaren Ventils 22 verändert werden. Während des An- und Abstellvorgangs ist der Bypasskanal 20 geschlossen, so dass eine Dämpfung erfolgt. Im Fahrbetrieb ist der Bypasskanal geöffnet, so dass kein Dröhnen auftritt. Folglich erhöht die erfindungsgemäße Dämpfungseinrichtung 10 den Fahrkomfort.

**Bezugszeichenliste**

| | | | |
|---|---|---|---|
| 10 | Dämpfungseinrichtung | 46 | zweite Übertragungseinrichtung |
| 11 | Zwischenplatte | | |
| 12 | erster Faltenbalg | 47 | Kraftfahrzeugmotor |
| 13 | erste Stirnplatte | | |
| 14 | erste Arbeitskammer | 50 | erster Bypasskanal |
| 15 | zweiter Faltenbalg | 51 | erstes schaltbares Ventil |
| 16 | zweite Stirnplatte | 52 | erstes Stellglied |
| 17 | zweite Arbeitskammer | 53 | zweiter Bypasskanal |
| 18 | Dämpfungsmedium | 54 | zweites schaltbares Ventil |
| 19 | Dämpfungskanal | 55 | zweites Stellglied |
| 20 | Bypasskanal | | |
| 22 | schaltbares Ventil | | |
| 23 | Stellglied | | |
| 24 | Doppelpfeil | | |
| 25 | Doppelpfeil | | |
| | | | |
| 30 | Befestigungseinrichtung | | |
| 31 | motorseitiges Verbindungselement | | |
| 32 | radhausseitiges Verbindungselement | | |
| | | | |
| 40 | Dämpfungssystem | | |
| 41 | Steuereinrichtung | | |
| 42 | erste Übertragungseinrichtung | | |
| 43 | Radhaus | | |
| 44 | Motorlager | | |
| 45 | Halter | | |

## Patentansprüche

1. Dämpfungseinrichtung (10) zur Dämpfung von An- und Abstellschlägen eines Kraftfahrzeugmotors (47), mit einer ersten und zweiten Kammer (14, 17), die mit einem Dämpfungsmedium (18) gefüllt sind und durch eine Zwischenplatte (11) getrennt sind, wobei die Kammern (14, 17) jeweils durch einen Faltenbalg (12, 15) und durch eine Stirnplatte (13, 16) begrenzt sind, wobei in der Zwischenplatte (11) ein die Kammern (14, 17) verbindender Dämpfungskanal (19) eingebracht ist, wobei beide Kammern (14, 17) mit wenigstens einem Bypasskanal (20) verbunden sind, und wobei der Bypasskanal (20) mittels eines schaltbaren Ventils (22, 51, 54) freigebbar oder verschließbar ist, **dadurch gekennzeichnet dass** der Bypasskanal (20) die beiden Kammern (14, 17) mit der Umgebung verbindet, dass der Schaltzustand des Ventils (22, 51, 54) vom Betriebszustand des Kraftfahrzeugmotors (47) abhängt und dass der Bypasskanal (19) während des An- und Abstellvorgangs des Kraftfahrzeugmotors (47) geschlossen und im Fahrbetrieb geöffnet ist.

2. Dämpfungseinrichtung nach Anspruch 1, **dadurch gekennzeichnet, dass** der Bypasskanal (20) einen größeren Querschnitt als der Dämpfungskanal (19) aufweist.

3. Dämpfungseinrichtung (10) nach Anspruch 1 oder 2, **dadurch gekennzeichnet, dass** der Bypasskanal (20) in der Zwischenplatte (11) eingebracht ist.

4. Dämpfungseinrichtung (10) nach Anspruch 1 oder 2, **dadurch gekennzeichnet, dass** ein erster Bypasskanal (50) in die erste Stirnplatten (13) zum Verbinden der ersten Kammer (14) mit der Umgebung eingebracht ist und dass ein zweiter Bypasskanal (53) in die zweite Stirnplatte (16) zum Verbinden der zweiten Kammer (17) mit der Umgebung eingebracht ist.

5. Dämpfungseinrichtung nach einem der Ansprüche 1 bis 4, **dadurch gekennzeichnet, dass** das Ventil (22, 51, 54) als mehrstufig oder stufenlos verstellbares Ventil ausgebildet ist.

6. Dämpfungseinrichtung (10) nach einem der Ansprüche 1 bis 5, **dadurch gekennzeichnet, dass** das Ventil (22, 51, 54) mittels Vakuum oder elektromagnetisch schaltbar ist.

7. Dämpfungseinrichtung (10) nach einem der Ansprüche 1 bis 6, **dadurch gekennzeichnet, dass** als Dämpfungsmedium (18) Luft verwendet wird.

8. Dämpfungseinrichtung (10) nach einem der Ansprüche 1 bis 7, **dadurch gekennzeichnet, dass** die Faltenbälge (12, 15) koaxial zum Dämpfungskanal (19) angeordnet sind.

9. Dämpfungseinrichtung (10) nach einem der Ansprüche 1 bis 8, **dadurch gekennzeichnet, dass** die erste Stirnplatte (13) an der Stirnseite des ersten Faltenbalgs (12) angebracht ist und dass die zweite Stirnplatte (16) an der Stirnseite des zweiten Faltenbalgs (15) angebracht ist.

10. Dämpfungseinrichtung (10) nach einem der Ansprüche 1 bis 9, **dadurch gekennzeichnet, dass** die Faltenbälge (12, 15) eine Länge von 5 mm bis 20 mm, vorzugsweise von 5 mm bis 10 mm, aufweisen.

11. Dämpfungseinrichtung (10) nach einem der Ansprüche 1 bis 10, **dadurch gekennzeichnet, dass** die Faltenbälge (12, 15) einen äußeren Durchmesser von 70 mm bis 100 mm, vorzugsweise von 80 mm bis 90 mm, aufweisen.

12. Dämpfungseinrichtung (10) nach einem der Ansprüche 1 bis 11, **dadurch gekennzeichnet, dass** die Faltenbälge (12,15) aus einem thermoplastischen Elastomer (TPE) oder einem Thermoplast (TP) hergestellt sind.

13. Dämpfungssystem (40) zur Dämpfung von An- und Abstellschlägen eines Kraftfahrzeugmotors (47) mit einer Dämpfungseinrichtung (10) nach einem der voranstehenden Ansprüche 1 bis 12 und einer Steuereinrichtung (41) zum Steuern des schaltbaren Ventils (22, 51, 54) der Dämpfungseinrichtung (10) abhängig vom Betriebszustand des Kraftfahrzeugmotors (47).

## Claims

1. A damping device (10) for damping starting and stopping impacts of a motor vehicle engine (47), having a first and second chamber (14, 17) filled with a damping medium (18) and separated by an intermediate plate (11), wherein the chambers (14, 17) are each bounded by bellows (12, 15) and by a face plate (13, 16), wherein a damping channel (19) connecting the chambers (14, 17) is formed in the intermediate plate (11), wherein the two chambers (14, 17) are connected by at least any bypass channel (20) and wherein the bypass channel (20) can be opened or closed by means of a switchable valve (22, 51, 54) **characterised in that** the bypass channel (20) connects the two chambers (14, 17) to the surroundings, **in that** the switched state of the valve (22, 51, 54) depends on the operating mode of the motor vehicle engine (47), and **in that** the bypass channel (19) is closed during the starting and stopping process of the motor vehicle engine (47) and is opened in the driving mode.

2. The damping device as claimed in claim 1, **characterised in that** the bypass channel (20) has a greater diameter than the damping channel (19).

3. The damping device (10) as claimed in claim 1 or 2, **characterised in that** the bypass channel (20) is formed in the intermediate plate (11).

4. The damping device (10) as claimed in claim 1 or 2, **characterised in that** a first bypass channel (50) is formed in the first face plate (13) in order to connect the first chamber (14) to the surroundings, and **in that** a second bypass channel (53) is formed in the second face plate (16) in order to connect the second chamber (17) to the surroundings.

5. The damping device as claimed in any of claims 1 to 4, **characterised in that** the valve (22, 51, 54) is configured as a valve which can be adjusted incrementally or in an infinitely variable fashion.

6. The damping device (10) as claimed in any of claims 1 to 5, **characterised in that** the valve (22, 51, 54) can be switched by means of a vacuum or electromagnetically.

7. The damping device (10) as claimed in any of claims 1 to 6, **characterised in that** air is used as the damping medium (18).

8. The damping device (10) as claimed in any of claims 1 to 7, **characterised in that** the bellows (12, 15) are arranged coaxially with respect to the damping channel (19).

9. The damping device (10) as claimed in any of claims 1 to 8, **characterised in that** the first face plate (13) is attached to the front side of the first bellows (12), and **in that** the second face plate (16) is attached to the front side of the second bellows (15).

10. The damping device (10) as claimed in any of claims 1 to 9, **characterised in that** the bellows (12, 15) have a length of 5 mm to 20 mm, preferably of 5 mm to 10 mm.

11. The damping device (10) as claimed in any of claims 1 to 10, **characterised in that** the bellows (12, 15) have an outer diameter of 70 mm to 100 mm, preferably of 80 mm to 90 mm.

12. The damping device (10) as claimed in any of claims 1 to 11, **characterised in that** the bellows (12, 15) are manufactured from a thermoplastic elastomer (TPE) or a thermoplastic (TP).

13. A damping system (40) for damping starting and stopping impacts of a motor vehicle engine (47) with a damping device (10) as claimed in any of the preceding claims 1 to 12, and a control device (41) for controlling the switchable valve (22, 51, 54) of the damping device (10) as a function of the operating state of the motor vehicle engine (47).

## Revendications

1. Dispositif d'amortissement (10) pour amortir des chocs de mise en marche et à l'arrêt d'un moteur de véhicule automobile (47), comprenant une première et une seconde chambre (14, 17), qui sont remplies d'un fluide d'amortissement (18) et qui sont séparées par une plaque intermédiaire (11), dans lequel les chambres (14, 17) sont respectivement limitées par un soufflet plissé (12, 15) et par une plaque frontale (13, 16), dans lequel un canal d'amortissement (19) qui relie les chambres (14, 17) est ménagé dans la plaque intermédiaire (11), dans lequel les deux chambres (14, 17) sont reliées avec au moins un canal de by-pass (20), et dans lequel le canal de by-pass (20) peut être libéré ou obturé au moyen d'une vanne commutable (22, 51, 54), **caractérisé en ce que** le canal de by-pass (20) relie les deux chambres (14, 17) avec l'environnement, **en ce que** l'état de commutation de la vanne (22, 51, 54) dépend de l'état de fonctionnement du moteur de véhicule automobile (47) et **en ce que**, le canal de by-pass (19) est fermé pendant les processus de mise en marche et à l'arrêt du moteur de véhicule automobile (47), et est ouvert pendant le fonctionnement en circulation.

2. Dispositif d'amortissement selon la revendication 1, **caractérisé en ce que** le canal de by-pass (20) présente une section plus grande que le canal d'amortissement (19).

3. Dispositif d'amortissement (10) selon la revendication 1 ou 2, **caractérisé en ce que** le canal de by-pass (20) est ménagé dans la plaque intermédiaire (11).

4. Dispositif d'amortissement (10) selon la revendication 1 ou 2, **caractérisé en ce qu'**un premier canal de by-pass (50) est ménagé dans la première plaque frontale (13) pour relier la première chambre (14) avec l'environnement, et **en ce qu'**un second canal de by-pass (53) est ménagé dans la seconde plaque frontale (16) pour relier la seconde chambre (17) avec l'environnement.

5. Dispositif d'amortissement selon l'une des revendications 1 à 4, **caractérisé en ce que** la vanne (22, 51, 54) est réalisée comme une vanne à plusieurs étages ou une vanne réglable en continu.

6. Dispositif d'amortissement (10) selon l'une des revendications 1 à 5, **caractérisé en ce que** la vanne (22, 51, 54) est commutable au moyen du vide ou par voie électromagnétique.

7. Dispositif d'amortissement (10) selon l'une des revendications 1 à 6, **caractérisé en ce que** de l'air est utilisé à titre de fluide d'amortissement (18).

8. Dispositif d'amortissement (10) selon l'une des revendications 1 à 7, **caractérisé en ce que** les soufflets plissés (12, 15) sont agencés coaxialement par rapport au canal d'amortissement (19).

9. Dispositif d'amortissement (10) selon l'une des revendications 1 à 8, **caractérisé en ce que** la première plaque frontale (13) est rapportée à la face frontale du premier soufflet plissé (12), et **en ce que** la seconde plaque frontale (16) est rapportée à la face frontale du second soufflet plissé (15).

10. Dispositif d'amortissement (10) selon l'une des revendications 1 à 9, **caractérisé en ce que** les soufflets plissés (12, 15) ont une longueur de 5 mm à 20 mm, de préférence de 5 mm à 10 mm.

11. Dispositif d'amortissement (10) selon l'une des revendications 1 à 10, **caractérisé en ce que** les soufflets plissés (12, 15) ont un diamètre extérieur de 70 mm à 100 mm, de préférence de 80 mm à 90 mm.

12. Dispositif d'amortissement (10) selon l'une des revendications 1 à 11, **caractérisé en ce que** les soufflets plissés (12, 15) sont fabriqués en un élastomère thermoplastique (TPE) ou une matière thermoplastique (TP).

13. Système d'amortissement (40) pour amortir des chocs de mise en marche et à l'arrêt d'un moteur de véhicule automobile (47) comprenant un dispositif d'amortissement (10) selon l'une des revendications précédentes 1 à 12, et un dispositif de commande (41) pour commander la vanne commutable (22, 51, 54) du dispositif d'amortissement (10) en dépendance de l'état de fonctionnement du moteur de véhicule automobile (47).
